# EUROPEAN PATENT APPLICATION

(11) **EP 0 762 795 A2**
(43) Date of publication of application: **12.03.1997**
(21) Application number: 96202215.8
(22) Date of filing: 07.08.1996
(51) Int. Cl.: H04Q 7/38, H04Q 7/22, H04M 3/50

(54) **Routing a call in a mobile network**

(30) Priority: 25.08.1995 FI 954003
(71) Applicant: TECNOMEN OY, 02270 Espoo (FI)
(72) Inventor: Penttonen, Jyrki, 02320 Espoo (FI)
(74) Representative: LEITZINGER OY

(57) **Abstract**

The invention relates to a method for routing a call in mobile network systems containing decentralized services. The call directing exchange receives the routing information required in directing a call from a nodal point (TISN) located outside the network. Said nodal point (TISN) provides a call with a roaming number which directs the call to some other nodal point (e.g. VMS).

## Description

The present invention relates to the routing of a call in mobile network systems containing decentralized services. The invention relates also to a system capable of implementing such a method.

### Problem to be solved

The integration of new services into existing PLMN networks is expensive, since the implementation of a routing required by the services is troublesome in massive telephone exchanges. This is particularly troublesome in networks that contain telephone exchanges from various manufacturers as it is implemented differently in every different type of exchange.

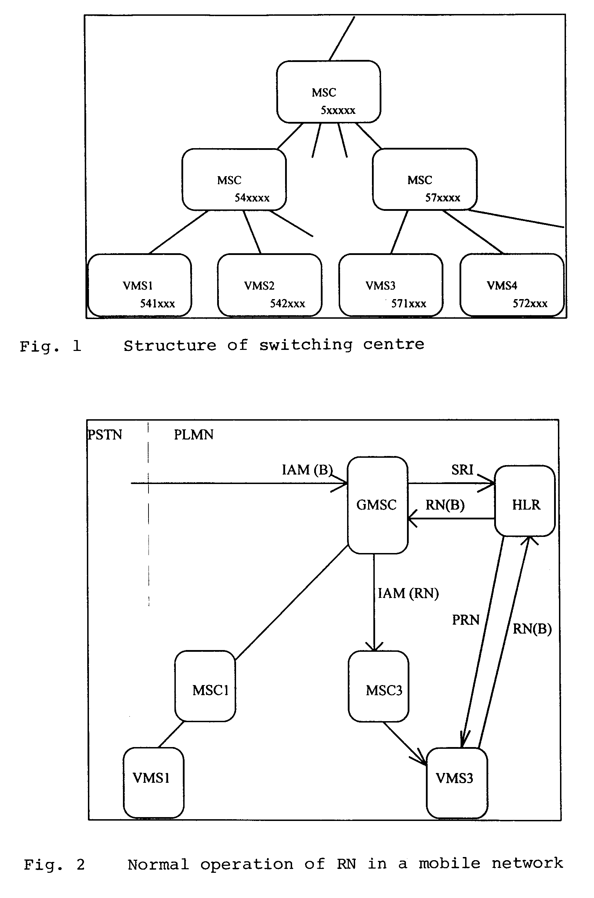

An example of this type of integrable service is a decentralized voice messaging system (VMS), consisting of several nodal points. To implement the routing of such a system by means of a telephone exchange would require changes in routing charts of the exchange. Telephone exchanges are structurally inflexible and all changes that should be introduced into the service, e.g. registration of new subscribers, subscriber transfers from one location to another, and the like, cause a change in the relevant routing chart. Fig. 1 depicts a typical hierarchal structure including an exchange and a voice mail associated therewith. Each nodal point (MSC) is allocated a number space according to which a call finds its way to a correct VMS. The exchange is only able to guide a call on the basis of a number. In such a structure, the subscribers cannot be flexibly transferred from one nodal point to another as a subscriber must remain under the control of the nodal point determined by its number. For example, subscriber no. 542123 must be in VMS2 since MSC1 handles numbers beginning with 54-. A need to transfer subscribers from one place to another may arise, for example, if one VMS nodal point is filled up and there is plenty of space in another one.

### The invention

A separate nodal point outside the network is used for effecting the routing of calls arriving in the service, the subscriber-related changes and expansions.

An RN (roaming number) concept according to the GSM standard is utilized in a new manner for the routing of calls. This is implemented by means of a TISN (Tecnomen Intelligent Service Node) nodal point. Traditionally, the RNs have been used in such a manner that a nodal point can only allocate an RN to those calls received by itself. A nodal point of the invention is capable of providing a call with an RN which directs the call to some other nodal point (e.g. VMS).

The characterizing features of the invention are set forth in the annexed claims.

Implementation of the invention is demonstrated in the accompanying drawings, in which
- fig. 1: depicts the structure of a telephone exchange;
- fig. 2: shows the normal operation of a roaming number in a mobile network;
- fig. 3: shows the physical structure of a TISN nodal point;
- fig. 4: shows the logical operation of a TISN nodal point;
- fig. 5: is a block diagram for a system in which a TISN is in service; and
- fig. 6: shows a flow chart for the system.

Roaming number is a temporary number, allocated to a call only for as long as it takes to establish the connection. The use of an RN in the GSM specification is determined as shown in fig. 2. The GMSC receives a call IAM(B), whereby it sends to HLR an inquiry about routing SRI (Send Routing Information). HLR knows the SS7 address for a VMS nodal point corresponding to the number, but the RN (Roaming Number) necessary for routing a call it must find out from the VMS in question (PRN; Provide Roaming Number). VMS sends RN and HLR transmits it to GMSC which, on the basis thereof, is able to connect the call to VMS. When the call has been established, the RN is disengaged. Each VMS has only an access to certain RNs prescribed thereto and each VMS can only supply an HLR with an RN included in its own range of numbers. The solution is based on the fact that the TISN is located outside an actual PLMN network and it serves to control all subscribers connected to the service. What the procedure accomplishes is that the guidance of all calls coming to a given service can be worked on in a centralized manner by a nodal point TISN located outside a PLMN network, regardless of which section of the network the requested subscriber is located in. The TISN controls operation of the RN in the entire network, thus being able to direct the calls to other nodal points. Making changes is flexible, subscribers can be added, transferred and removed by means of an OMC computer which is in communication with the TISN.

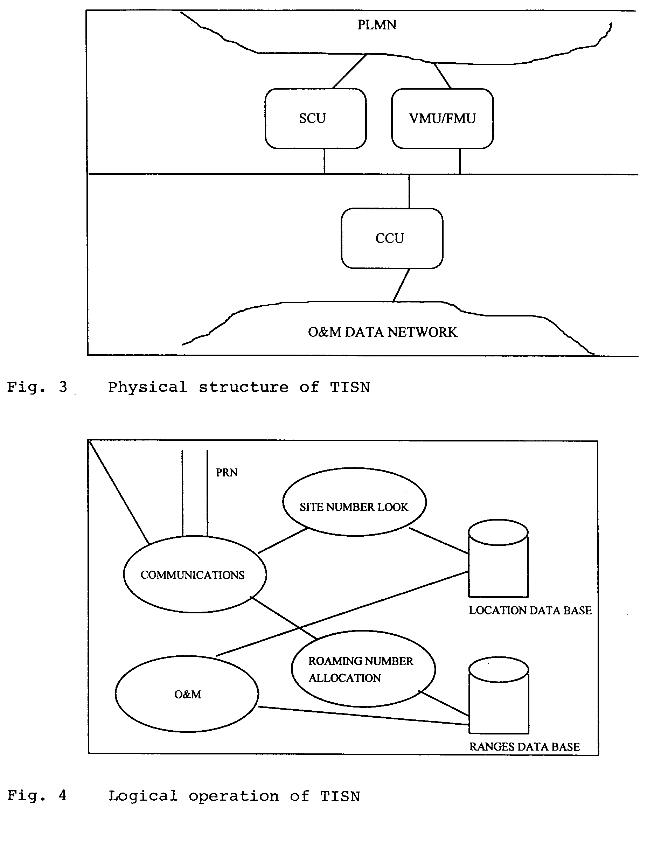

Physically, the TISN can be part of a service operating system, e.g. a voice mail system, having a structure as shown in fig. 3, consisting of three blocks; an SCU which handles digitalization and data bases, a CCU which handles the OMC connections and a VMU/FMU which is the component carrying out a service (voice mail). If the TISN is set up as a separate system, it will consist of SCU and CCU.

Logically, the TISN breaks down to the blocks shown in fig. 3. Fig. 4 depicts its logical operation.

The Locations Data Base (LDB) and Ranges Data Base (RDB) are normal data bases. From the LDB, a subscriber's B-number is supplied with a nodal point address (Node ID) corresponding to it, i.e. the LDB knows the nodal point this particular subscriber is located at. The RDB is searched for an available RN (Roaming Number) for the nodal point address, i.e. the RDB tabulations show which RN's are available and which RN is allocated to each Node ID.

The communications block handles the traffic towards a network; inquiries and replies as well as SS7 communication. This block does not take a stand regarding the information transmitted thereby. The subscriber-related information (e.g. new subscribers, subscriber transfers, new nodal points) are fed into the TISN data bases from the OMC.

### Benefits of the invention

The invention provides a method which is inexpensive, expedient and versatile compared to those used at present. For example, the invention enables the balancing of a load as an internal procedure within a given service. The invention is also economical since, by locating intelligence associated with the routing of calls outside the network, it is also possible to take into consideration the internal structure of a service platform outside the network. For example, if the question is about a decentralized voice mail system, it will be preferable that the routing of calls be operated as an internal procedure within the voice mail system instead of a procedure involving massive exchanges. The invention provides a system which is independent of the type and operation of exchanges (MSC). It can be implemented in networks including exchanges from various manufacturers.

Another advantage offered by the method of the invention is that it is no longer necessary to route the voice paths of calls but the operation is solely based on signalling information. Thus, the voice paths are connected along an optimal route, which is a cost efficient solution.

It is possible to operate IN-type services in a PLMN network without modifying the network configuration.

It allows the consideration of parameters associated with carrying out dynamic services or the like. The balancing of a load and the time-based selection of a service or a route are examples of such.

### A working example of the invention

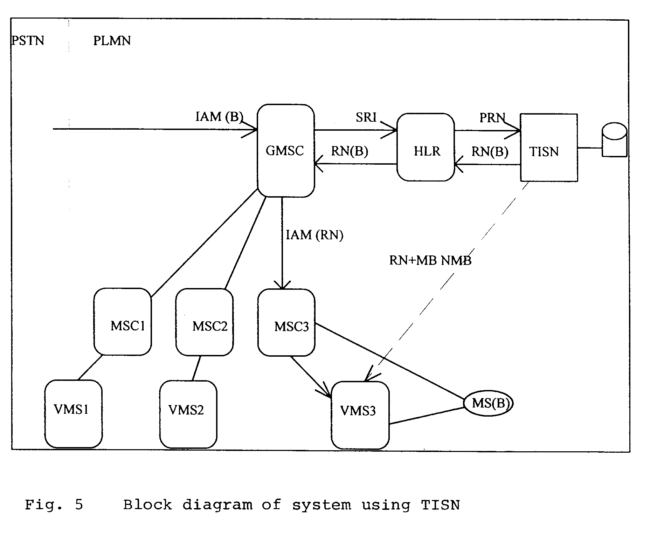

A public land mobile network PLMN, including a voice messaging system VMS, is depicted in fig. 5.

The PLMN network receives calls IAM from outside guided over a GMSC.

In order to be able to forward a call to a correct location the GMSC is required to know the location of a subscriber MS(B). That information is obtained from an HLR which has knowledge of the exchange which the subscriber is subjected to.

The routing of a call requires a roaming number RN which enables the GMSC to route the call. This information is obtained from a TISN which engages an RN for this particular call for the duration of the call.

On the basis of this information, the call is directed from the GMSC to a correct VMS, in this case VMS3.

At the same time, the TISN informs this particular VMS of the fact that the calls coming to a particular subscriber are delivered there, i.e. that the calls coming under a certain roaming number RN(B) are intended to a certain subscriber B.

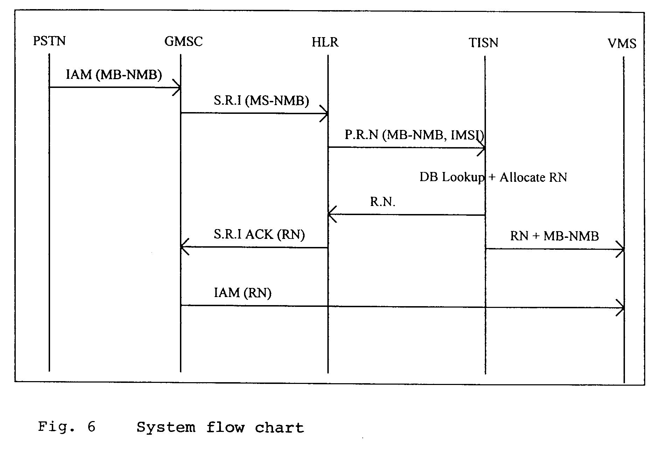

The application has its operating flow chart depicted in fig. 6.

From outside the network comes a call intended for the voice mail box of a B-subscriber in the VMS service.

The GMSC receives an IAM which contains a telephone number (MB-NMB) for the B-subscriber.

The GMSC asks the HLR for the subscriber's location by sending it an SRI.

The HLR requests from the TISN a Roaming Number for the call to be transmitted by using a PRN inquiry.

The TISN looks up the information in its data base (RDB), engages an RN for this particular subscriber and informs the HLR thereof.

The TISN reports the engagement also to that VMS which is to receive the call. Thus, on the basis of the RN, the VMS is able to work out which subscriber is to receive the call.

The HLR transmits the RN-information to the GMSC which forwards the call to the appropriate VMS.

### Meanings of the abbreviations appearing in the text

CCU = Central Control Unit, a unit for the Tecnomen VMS product
GMSC = Gateway Mobile Switching Centre, providing communications from a mobile network to other networks
GSM = Global System for Mobile Communications, a mobile network system
HLR = Home Location Register, a register in which the location of a subscriber is determined
IAM = Initial Address Message, determining the A- and B-subscriber for a call
IMSI = International Mobile Station Identity, an internal number in a mobile network for identifying the SIM-card of a telephone
IN = Intelligent Network
LDB = Locations Data Base, a data base regarding the location of subscribers in a mobile network
MB-NMB = Mobile Number, the telephone number of a B-subscriber
MSC = Mobile Switching Centre, the telephone exchange of a mobile network
OMC = Operating and maintenance Centre
PLMN = Public Land Mobile Network, a public mobile telephone network
PRN = Provide Roaming Number, request for a roaming number
PSTN = Public Switched Telephone Network, an immobile telephone network
RDB = Range Data Base, a data base regarding the roaming numbers in a mobile network
RN = Roaming Number
SCU = Signalling Control Unit, a unit for the Tecnomen VMS product
SRI = Send Routing Information, a request for routing inrormation
SS7 = Signalling System 7, an ITU-T signalization standard
VMS = Voice Messaging System, a voice mail service
VMU/FMU = Voice/Fax Messaging Unit, a unit for the Tecnomen VMS product

## Claims

1. A method for routing a call in mobile network systems containing decentralized services, **characterized** in that the call directing exchange receives the routing information required in directing a call from a nodal point (TISN) located outside the network.

2. A system implementing the method of claim 1, wherein the routing is controlled by means of a roaming number (RN), **characterized** in that said nodal point (TISN) provides a call with a roaming number which forwards the call to some other nodal point (e.g. VMS).

3. A system implementing the method of claim 1, **characterized** in that said nodal point is connected to a network which includes exchanges (MSC) of various types and from various manufacturers.

4. A system implementing the method of claim 1, **characterized** in that said nodal point (TISN) serves as part of a nodal point operating a service.

5. A system as set forth in claim 4, **characterized** in that said service is a voice messaging system (VMS).
